# EUROPEAN PATENT APPLICATION

(11) **EP 1 610 079 A1**
(43) Date of publication of application: **28.12.2005**
(21) Application number: 05386015.1
(22) Date of filing: 15.06.2005
(51) Int. Cl.: F26B 17/04, A01F 15/04

(54) **Improved facilities for desiccation and parcelling of clover and other grass**

(30) Priority: 25.06.2004 GR 2004100257
(71) Applicant: Papaefthymiou, Theodoros, TK 55 131 Kalamaria, Thessaloniki (GR)
(72) Inventor: Papaefthymiou, Theodoros, TK 55 131 Kalamaria, Thessaloniki (GR)

(57) **Abstract**

Desiccation facilities comprised of feeding (1), clover sorting (1a), desiccation (2), cooling (3), wetting (4), parcelling (5) and storage (5a) departments. With special dredges (12) uniform sorting of the inserted product is provided.

These facilities provide appropriate desiccation with low energy consumption.

## Description

This invention concerns the construction of desiccation facilities with final product clover and other grass parcels as animal feed.

Till now various desiccation methods are known but their disadvantage was that at the parcelling there was loss in leaves and the final product was comprised only of stalks.

In comparison to those, my desiccation facilities succeed significant decrease in consumed energy for the procedure and, moreover, the destruction of leaves is avoided.

In desiccation phase the protein level of the plant is at 20%, while in desiccation method in sun it is limited at 8-9%.

The carotein level (provitamins) in my case is 400mgr/1kg of desiccated clover, while at the exposion to sun it is around 40, i.e. 1/10. It is concluded that the product quality according to my desiccation procedure is obviously more improved than natural desiccation and this with pellets (fuels, fire).

In these desiccation facilities a complex of improved construction is revealed which has the following operation phases.

The first phase of desiccation for better decrease of humidity levels in clover requires a sorting room for uniform distribution and desiccation. The pre-desiccation procedure in the sorter takes place for decrease of humidity levels before its entering into main desiccation room.

In next stages there is emmission of the air. This procedure aims to use its thermal power, success for a mild desiccation in order to maintain the qualitative features in grass and decrease the consumed energy.

Regarding cooling, the temperature of the product should be at environment temperature maximum or below it.

In wetting phase water vapor is emitted in the air according to the desired humidity levels of the product for its better parcelling.

An application is presented at the following figures, where

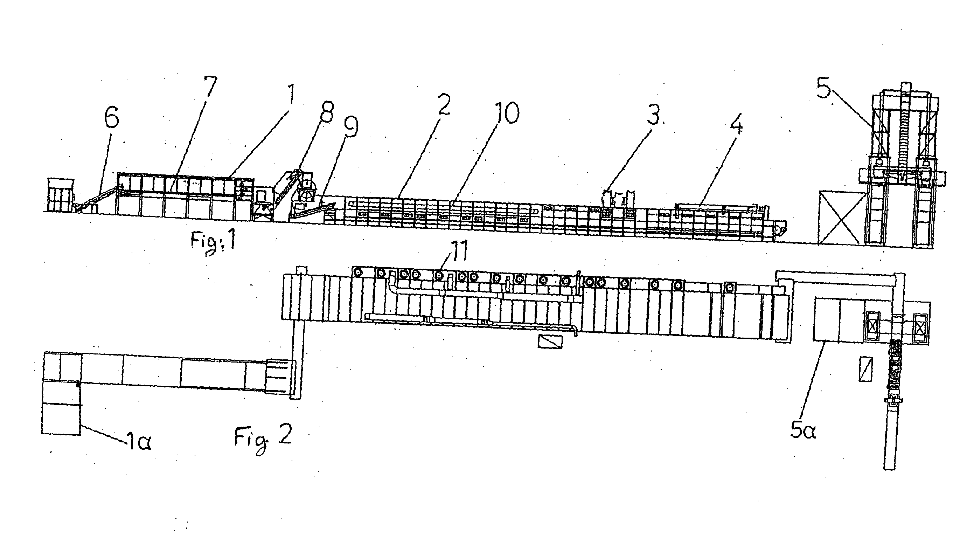

In figure 1 there is the frontage of improved desiccation facilities in full development.

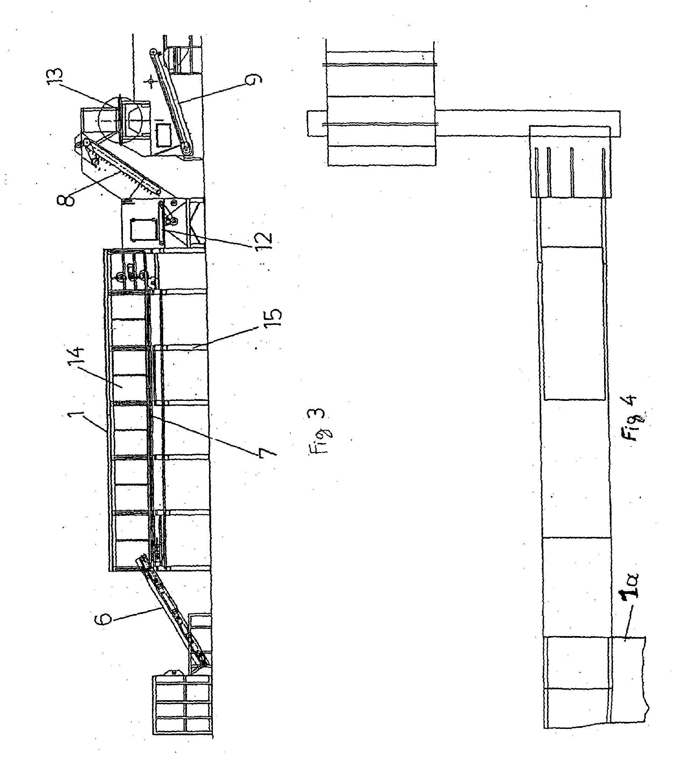

In figure 2 the ground plan of the facilities is presented.

In figure 3 we see the frontage of load department.

In figure 4 the ground plan of load department is noted.

In figure 5 we see the frontage of desiccation-cooling and wetting departments.

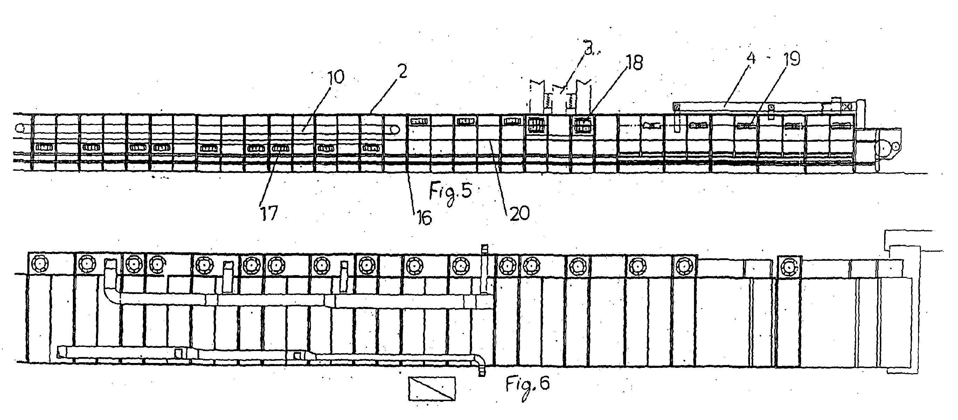

In figure 6 the ground plan of the above mentioned departments is presented.

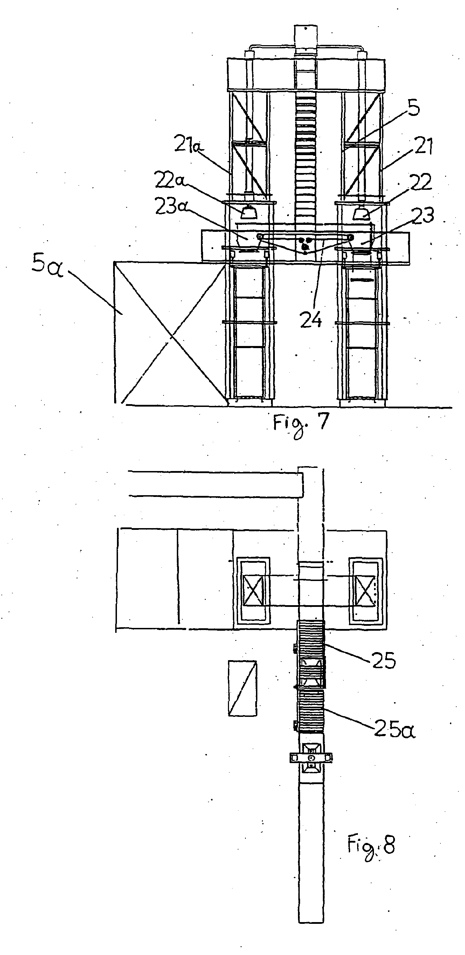

Figure 7 shows the frontage of parcelling and storage departments of the clover.

In figure 8 there is the ground plan of the above departments.

Referring to the figures the improved desiccation and parcelling facilities of clover and other grass are comprised of: feeding department (1), the sorting room (1a), the conveyor (6) and feeding conveyor (7) ending to special dredges (12) for smooth route as well as a conveyor (8) and a volumetric feeder (13) and an installation conveyor (9).

The feeding department is constructed by a metal base (15) with frames 1,2m high (14). Moreover, there is the desiccation department (2) with frame (16) of door profiles (10) with integrated insulation in totally waterproof place and conveyor (20) at his length.

In desiccation equipment there are centrifugal fans (17) at a vertical rotation axis. In cooling department (3) there are fans (18) of double blades for production of fresh air and remotion of saturated air. Additionally, there is the wetting department (4), where there are axial fans (19) for ventilation. Finally, in parcelling department (5) there are two pistons (22) (22a) for grass compression, horizontal conveyor (24), two towers (21) 21a), two funnels (23), (23a) and two conveyors (25), (25a) for transport of parcels after the compression and storage room (5a). The conditions are that when compression equipment has too much work, it will not stop after the end of desiccation, which should not take place from 21.30-08.30.

## Claims

1. The improved desiccation and parcelling facilities of clover and grass are comprised of:
feeding department (1), the sorting room (1a), the conveyor (6) and feeding conveyor (7) ending to special dradges (12) for smmoth route as well as a conveyor (8) and a volumetric feeder (13) and an installation conveyor (9).
The feeding department is constructed by a metal base (15) with frames 1,2m high (14). Moreover, there is the desiccation department (2) with frame (16) of door profiles (10) with integrated insulation in totally waterproof place and conveyor (20) at his length.
In desiccation equipment there are centrifugal fans (17) at a vertical rotation axis. In cooling department (3) there are fans (18) of double blades for production of fresh air and remotion of saturated air. Additionally, there is the wetting department (4), where there are axial fans (19) for ventilation. Finally, in parcelling department (5) there are two pistons (22) (22a) for grass compression, horizontal conveyor (24), two towers (21) 21a), two funnels (23), (23a) and two conveyors (25), (25a) for transport of parcels after the compression and storage room (5a). The conditions are that when compression equipment has too much work, it will not stop after the end of desiccation, which should not take place from 21.30-08.30.
